# FASCICULE DE BREVET EUROPEEN

(11) **EP 0 520 854 B1**
(45) Date de publication et mention de la délivrance du brevet: **17.01.1996**
(21) Numéro de dépôt: 92401640.5
(22) Date de dépôt: 12.06.1992
(51) Int. Cl.: F41H 7/04

(54) **Procédé d'assemblage de deux pièces en tôle, assemblage métallique et structure en tôle de blindage obtenus par ce procédé**
Verfahren zum Verbinden von zwei Blechteilen, Verbindung von Metall und nach diesem Verfahren hergestellte Panzerblechgebilde
Method for joining two pieces of sheet metal, metallic assembly and structure from armour plate obtained by this method

(30) Priorité: 27.06.1991 FR 9107986
(43) Date de publication de la demande: 30.12.1992
(73) Titulaire: GIAT INDUSTRIES, F-78000 Versailles (FR)
(72) Inventeur: Berniolles, Jean, F-78000 Versailles (FR)
(74) Mandataire: Célanie, Christian

(56) Documents cités:
- FR-A- 834 916
- PATENT ABSTRACTS OF JAPAN vol. 9, no. 7 (M-350)(1730) 12 Janvier 1985 & JP-A-59 156 585 (HITACHI SEISAKUSHO K.K.) 5 Septembre 1984

## Description

La présente invention est relative à l'assemblage de deux pièces de forme polygonale obtenues par découpage d'une tôle, telle qu'une tôle de blindage en acier à très haute dureté.

Les tôles de blindage en acier à très haute dureté (dureté supérieure à 360 Brinell) sont très difficilement soudables. Pour réaliser des assemblages, après avoir découpé les tôles aux formes voulues, on les place en position d'assemblage et on fait une soudure avec un métal d'apport austénitique afin de réduire les risques de fissuration à froid. Mais de tels joints soudés ont une résistance mécanique environ deux fois inférieure à celle du métal des tôles et ils ont une faible résistance à l'impact de projectiles. Pour améliorer la résistance à l'impact de tels assemblages on met au moins une tôle ou pièce en appui sur la tranche d'une autre tôle et le choix des appuis doit être fait en fonction de l'axe des tirs de projectiles contre lesquels on veut se prémunir.

Cette technique présente plusieurs inconvénients.

Tout d'abord, elle ne permet pas toutes les géométries pour l'assemblage ; ensuite, elle nécessite une préparation des tranches des tôles spécifique à chaque assemblage ; enfin, le soudage ne peut pas être fait par des moyens informatiques.

Dans le FR-A-834.916 sur lequel les préambules des revendications indépendantes 1, 4 et 6 sont fondés, on a décrit une caisse blindée pour véhicule constituée par des tôles assemblées par soudage suivant des bords rapportés l'un contre l'autre. Le soudage des tôles est réalisé en utilisant un métal d'apport, ce qui crée une discontinuité du blindage au niveau des joints soudés. En outre, les bords de tôles juxtaposés doivent délimiter entre eux des cavités qui sont remplies par le métal d'apport.

Il est donc difficile d'obtenir une forme et des dimensions précises de la caisse à partir des tôles prédécoupées.

Dans le JP-A-59-156585, est décrit un procédé de soudage par faisceau d'électrons de deux pièces planes pour obtenir un assemblage en forme de Té. L'une des pièces comporte un chanfrein incliné par rapport à ses faces et vient reposer sur la seconde pièce qui est usinée pour comporter une surface d'appui inclinée. Ce procédé n'est pas adapté à la fabrication de structures par découpage et assemblage de tôles.

Le but de la présente invention est de proposer un procédé d'assemblage de deux pièces en tôle, notamment en tôle de blindage en acier à très haute dureté, qui permette toutes les géométries avec une préparation simple des tranches des pièces en tôle, qui puisse être réalisé par des moyens automatiques de conception et de fabrication assistée par ordinateur (CFAO) et qui ait une bonne résistance à l'impact de projectiles.

A cet effet, l'invention a pour objet un procédé d'assemblage de deux pièces de forme polygonale obtenues chacune par découpage d'une tôle métallique telle qu'une tôle de blindage en acier à très haute dureté par soudage de bords des pièces en position juxtaposée selon lequel :
- on réalise sur chacune des pièces au moins un chanfrein plan, incliné par rapport aux faces de la pièce, suivant au moins un bord de la pièce, pendant le découpage de la pièce,
- on place les pièces en position d'assemblage, un chanfrein de l'une des pièces venant en contact avec un chanfrein de la seconde pièce, suivant un plan d'appui, et
- on soude les pièces en une seule passe, suivant le plan d'appui par un procédé de soudage à haute densité d'énergie, tel que le soudage par laser ou par faisceaux d'électrons, sans métal d'apport.

De préférence, le plan d'appui des chanfreins de deux tôles ou de deux pièces contiguës est le plan bissecteur du dièdre formé par les deux tôles ou les deux pièces.

L'invention est également relative à un assemblage de deux pièces découpées dans des tôles, notamment dans des tôles de blindage en acier à très haute dureté dans lequel les deux pièces constituent un dièdre et sont liées par un cordon de soudure sans métal d'apport situé dans un plan intérieur au dièdre formé par les pièces, le cordon de soudure intéressant toute l'épaisseur des pièces.

Avec ce procédé, il est possible de réaliser des polyèdres de forme quelconque ayant une très bonne résistance à l'impact de projectiles.

La découpe des pièces à assembler est très simple de même que le soudage et ces deux opérations sont adaptées aux moyens de conception et de fabrication par ordinateur. En particulier, elles peuvent être réalisées par un robot tel qu'un portique à cinq axes de liberté.

De plus, l'assemblage est obtenu par fusion localisée du métal des tôles ou pièces si bien que le joint soudé a la même résistance à l'impact de projectiles que les tôles ou pièces.

L'invention va maintenant être décrite plus en détail en regard des figures annexées.

La figure 1 est une vue en perspective partielle d'un polyèdre assemblé à l'aide du procédé selon l'invention.

La figure 2 est une vue en coupe transversale de deux pièces de la structure polyèdrique placées en position d'assemblage.

La figure 3 est une vue en coupe suivant 3-3 de la figure 1 de deux pièces assemblées par soudure.

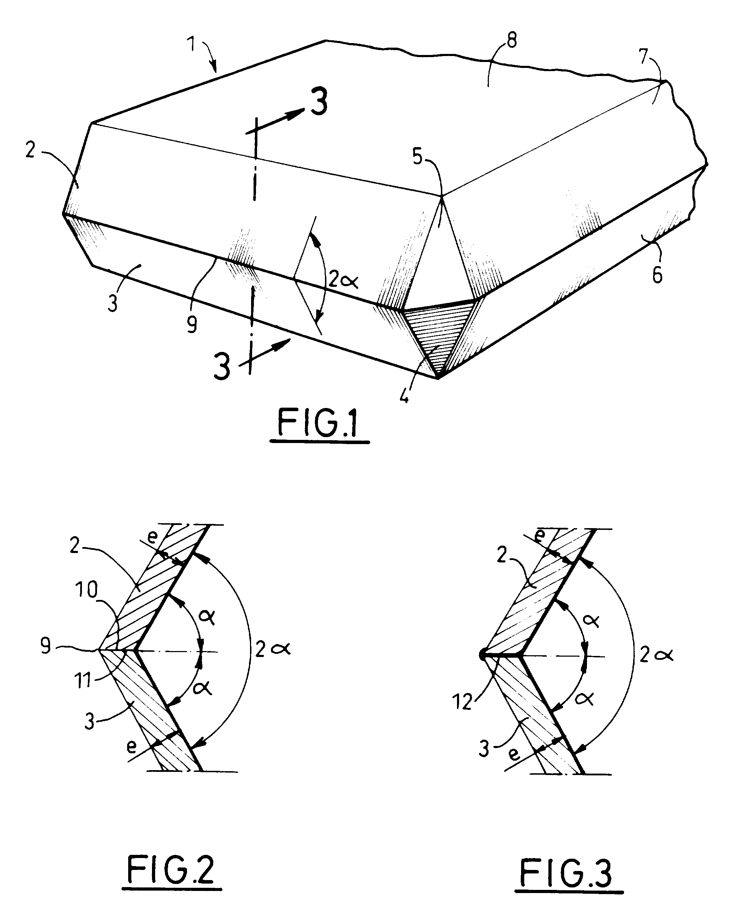

Pour fabriquer des carcasses de véhicule blindé on est amené à réaliser des structures polyédriques telles la structure repérée dans son ensemble par le repère 1 à la figure 1. Les faces de ce polyèdre 1 sont des polygones plans 2, 3, 4, 5, 6, 7, 8. Deux faces contiguës 2, 3 sont jointives suivant une arête 9 et forment un dièdre d'angle au sommet 2α. Les faces 2, 3, 4, 5, 6, 7, 8 sont des pièces polygonales découpées dans des tôles d'épaisseur comprise généralement entre 2 mm et 20 mm. Du fait de l'épaisseur des tôles, pour que deux pièces contiguës 2, 3 soient bien jointives, il est nécessaire de prévoir sur la tranche de chaque pièce, un chanfrein d'angle adapté. Une construction géométrique simple permet de déterminer l'angle que doit faire chaque chanfrein avec les surfaces de la pièce. En particulier, comme représenté à la figure 2, lorsque toutes les pièces ont la même épaisseur e, chaque chanfrein 10, 11 correspondant à l'arête 9 d'un dièdre d'angle au sommet 2α fait un angle α avec la surface de chaque pièce. On dit alors que le chanfrein est situé dans le plan bissecteur du dièdre.

Pour réaliser un assemblage polyédrique on commence par découper les pièces 2, 3, 4, 5, 6, 7, 8 aux dimensions voulues en faisant une coupe biaise, c'est-à-dire inclinée par rapport à la perpendiculaire à la surface de la tôle. Cette coupe biaise permet de réaliser directement le chanfrein. En particulier, lorsque la coupe est réalisée par coupe au laser, la qualité géométrique et l'état de surface des tranches des pièces obtenues permet de les assembler directement sans autre usinage. De plus, la définition géométrique des pièces est simple puisqu'elle correspond à un pourtour polygonal et pour chaque arête à une inclinaison de la coupe facile à déterminer. Cette simplicité géométrique permet de recourir à une conception à l'aide des méthodes de conception assistée par ordinateur et il est possible de découper les tôles en utilisant des machines à commande numérique.

Après avoir découpé les pièces on les met en position d'assemblage suivant un montage où elles constituent le polyèdre qu'on souhaite réaliser. Les pièces sont jointives et en appui par l'intermédiaire de leurs chanfreins 10, 11, comme représenté sur la figure 2. Elles sont maintenues en place par un outillage que l'homme de métier sait réaliser. Cet outillage laisse libre toutes les arêtes.

Une fois assemblées, les pièces sont soudées au laser ou au faisceau d'électrons. Pour celà, un faisceau laser ou un faisceau d'électrons est dirigé suivant le plan d'appui formé par deux chanfreins en contact d'assemblage et on fait parcourir au faisceau toutes les arêtes.

Lorsque le faisceau entre en contact avec la zone de jonction entre deux pièces, il pénètre entre les chanfreins et fait fondre le métal localement sur toute l'épaisseur des pièces. De petites quantités de métal liquide provenant de chacune des pièces se mélangent. Lorsque le faisceau se déplace, la zone fondue se déplace avec lui. Le métal qui était fondu et qui ne reçoit plus le faisceau se solidifie et forme une liaison entre les deux pièces. En parcourant toutes les arêtes, on crée ainsi une liaison complète entre les différentes pièces. Cette liaison a la même composition chimique et les mêmes propriétés mécaniques que le métal qui constitue les pièces.

Comme il est visible sur la figure 3, on obtient ainsi des pièces 2, 3 ou tôles liées par un cordon de soudure 12 situé dans le plan formé initialement par les chanfreins 10, 11 représentés sur la figure 2, c'est-à-dire dans le plan bissecteur du dièdre formé par les pièces contiguës. Ce cordon de soudure intéresse toute l'épaisseur des pièces ou tôles.

On comprendra aisément que si les deux pièces ou tôles contiguës n'ont pas la même épaisseur, le plan de liaison des deux pièces ou tôles peut être différent du plan bissecteur du dièdre mais reste un plan intérieur audit dièdre.

## Revendications

1. Procédé d'assemblage de deux pièces (2, 3) de forme polygonale obtenues chacune par découpage d'une tôle métallique telle qu'une tôle de blindage en acier à très haute dureté, par soudage de bords des pièces en position juxtaposée, caractérisé en ce que :
- on réalise sur chacune des pièces (2, 3) au moins un chanfrein (10, 11) plan, incliné par rapport aux faces de la pièce (2, 3), suivant au moins un bord de la pièce, pendant le découpage de la pièce,
- on place les pièces (2, 3) en position d'assemblage, un chanfrein (10) de l'une des pièces (2) venant en contact avec un chanfrein (11) de la seconde pièce (3), suivant un plan d'appui, et
- on soude les pièces (2, 3) en une seule passe, suivant le plan d'appui par un procédé de soudage à haute densité d'énergie, tel que le soudage par laser ou par faisceaux d'électrons, sans métal d'apport.

2. Procédé suivant la revendication 1, caractérisé en ce que le découpage des pièces (2, 3) est effectué au laser.

3. Procédé suivant l'une quelconque des revendications 1 à 2, caractérisé en ce que le plan d'appui des chanfreins (10, 11) de deux pièces continguës (2, 3) est le plan bissecteur du dièdre formé par les pièces (2, 3).

4. Assemblage métallique constitué par deux pièces en tôle (2, 3) soudées entre elles suivant un bord rectiligne et disposées de manière à constituer un dièdre, caractérisé en ce que les pièces (2, 3) sont liées par un cordon de soudure (12) sans métal d'apport réalisé par laser, situé dans un plan intérieur au dièdre formé par les deux pièces (2, 3) et s'étendant suivant toute l'épaisseur des pièces (2, 3).

5. Assemblage selon la revendication 4, caractérisé en ce que le plan intérieur au dièdre est le plan bissecteur du dièdre.

6. Structure métallique de forme polyédrique, telle qu'une carcasse (1) de véhicule blindé constituée par des pièces en tôle de blindage de forme polygonale assemblées entre elles par soudage suivant des bords juxtaposés, caractérisée en ce que les pièces (2, 3, 4, 5, 6, 7, 8) en tôle de blindage de forme polygonale sont assemblées entre elles par un procédé suivant l'une des revendications 1 à 3.

## Patentansprüche

1. Fügeverfahren für zwei Teile (2, 3) vieleckiger Form, die jeweils durch Ausschneiden aus einem Metallblech, wie z.B. Panzerblech aus Stahl mit sehr hoher Härte hergestellt wird, durch Zusammenschweißen der Kanten der Teile in nebeneinanderliegender Position, gekennzeichnet dadurch, daß :
- an jedem der Teile (2, 3) mindestens eine ebene Fase (10, 11) gefertigt wird, die bezogen auf die Flächen des Teils (2, 3) geneigt ist, mindestens entlang einer Kante des Teils, und zwar während des Zuschneidens des Teils,
- die Teile (2, 3) in Fügeposition gebracht werden, wobei eine Fase (10) eines der Teile (2) die andere Fase (11) des zweiten Teils (3) in einer Auflageebene berührt, und
- die Teile (2, 3) in einem Durchgang entlang der Auflageebene durch ein Schweißverfahren mit hoher Energiedichte zusammengeschweißt werden, wie z.B. durch Laserschweißen oder Elektronenstrahlschweißen und ohne Schweißzusatzstoff.

2. Verfahren gemäß Anspruch 1, gekennzeichnet dadurch, daß das Ausschneiden der Teile (2, ) mit dem Laser erfolgt.

3. Verfahren gemäß einem beliebigen der Ansprüche 1 bis 2, gekennzeichnet dadurch, daß die Auflagefläche der Fasen (10, 11) von 2 nebeneinanderliegenden Teilen (2, 3) die halbierende Ebene des von den Teilen (2, 3) gebildeten Dieders ist.

4. Metallaufbau bestehend aus zwei Blechteilen (2,3), die entlang einer geradlinigen Kante geschweißt und so positioniert sind, daß sie ein Dieder bilden, gekennzeichnet dadurch, daß die Teile (2, 3) durch eine Schweißnaht (12) ohne Schweißzusatzstoff verbunden werden. Die Schweißnaht wird mit einem Laserstrahl hergestellt und befindet sich in der inneren Ebene des Dieders, die von den beiden Teilen (2, 3) gebildet wird und sich entlang der gesamten Stärke der Teile (2, 3) erstreckt.

5. Aufbau gemäß Anspruch 4, gekennzeichnet dadurch, daß die Innenebene des Dieders die halbierende Ebene des Dieders ist.

6. Metallaufbau in körperlicher Vieleckform, wie z.B. der Aufbau (1) eines Panzerfahrzeugs, bestehend aus Panzerblechteilen in Vieleckform, die untereinander durch Schweißung entlang der nebeneinanderliegenden Kanten gefügt werden, gekennzeichnet dadurch, daß die Teile (2, 3, 4, 5, 6, 7, 8) aus Panzerblech in vieleckiger Form untereinander durch ein Verfahren gemäß einem der Ansprüche 1 bis 3 gefügt werden.

## Claims

1. An assembly process for two parts (2,3) of a polygonal shape both obtained by cutting from a metal sheet such as a very hard steel armour plating, by welding the edges of the parts in juxtaposition, a process characterised in that :
- at least one plane bevel (10,11) is made on each of the parts (2,3), slanted with respect to the faces of the part (2,3), along at least one edge of the part, when the part is being cut,
- the parts (2,3) are placed in the assembly position, one bevel (10) of one of the parts (2) coming into contact with one bevel (11) of the second part (3), along a bearing plane, and
- the parts (2, 3) are welded in a single-pass, along the bearing plane, by a high density power welding process, such as welding by laser or by electron beam, without weld metal.

2. A process according to Claim 1, characterised in that the cutting of the parts (2, 3) is carried out by laser.

3. A process according to either Claim 1 or 2, characterised in that the bearing plane of the bevels (10, 11) of two contiguous planes (2,3) is the bisecting plane of the dihedral angle formed by the parts (2, 3).

4. A metallic assembly formed of two parts (2, 3) made of sheet metal, welded together along a straight edge and positioned so as to form a dihedral angle, characterised in that the parts (2, 3) are linked by a welding bead (12) without weld metal and carried out by laser, located in an inner plane of the dihedral angle formed by the two parts (2, 3) and extending along the full thickness of the parts (2, 3).

5. An assembly according to Claim 4, characterised in that the inner plane of the dihedral angle is the bisecting plane of the dihedral angle.

6. A metallic structure of a polyhedral shape, such as a body (1) of an armoured vehicle formed of parts in armour plating of a polygonal shape assembled together by means of welding along juxtapositioned edges, characterised in that the parts (2? 3, 4? 5? 6, 7, 8) of armour plating in a polygonal shape are assembled by a process according to one of Claims 1 to 3.
